# EUROPEAN PATENT APPLICATION

(11) **EP 2 591 666 A1**
(43) Date of publication of application: **15.05.2013**
(21) Application number: 13154621.0
(22) Date of filing: 10.06.2009
(51) Int. Cl.: A01G 31/00, A01G 9/10, A01H 4/00

(54) **Method for manufacturing a plant substrate and plant substrate**

(30) Priority: 10.06.2008 NL 2001664
(62) Divisional of application: 09762701.2
(71) Applicant: Recticel Holding Noord B.V., 4041 CL Kesteren (NL)
(72) Inventor: Lievestro, Robert, 6662 CC Elst (NL); Hesse, Huib, 6922 EA Duiven (NL); Poppe, Karel Romain, B-9240 Zele (BE); Mortelmans, Rudi Frans, B-9140 Temse (BE)
(74) Representative: Jansen, Cornelis Marinus

(57) **Abstract**

A plant substrate comprising primary polyurethane foam, manufactured by a method for manufacturing a plant substrate, wherein in a primary polyurethane forming process polyol and isocyanate are reacted with each other so that primary polyurethane foam is formed, wherein the primary formed polyurethane foam is deployed as plant substrate.

## Description

This is a divisional application from European patent application 09762701.2.

The invention relates to a method for manufacturing a plant substrate.

The invention also relates to a plant substrate.

A known plant substrate is mineral wool, such as rock wool or glass wool. Drawbacks of this type of mineral wool as substrate are, *inter alia,* that it is difficultly recyclable, or at least relatively little efficiently so.

It is also known to use polyurethane as plant substrate. As known, initially, virgin polyurethane foam is formed by reacting polyol with isocyanate, for instance in a mold, and for instance with the aid of water as blowing agent. This is the primary forming process from which virgin polyurethane foam, also called primary polyurethane foam, will be formed. In many cases, during or after this primary forming process, additives are added, such as, for instance, fire retardants. After this primary forming process, in a second forming process, the foam blocks may be cut into a particular shape or size, depending on the intended use, for instance chairs or mattresses. In many cases, upon cutting, polyurethane foam rests are formed. Polyurethane rests can also come about in other manners during the primary or secondary forming process.

It is customary to process the polyurethane foam rests that are formed in the production process into flakes for use in plant substrates, as described in European patent EP 0 962 129 and Dutch patent NL 9 002 467. In these cases, a linking process, for instance a second polymerization process, is used for realizing a block or mat from the rests.

In EP 0 962 129, a plant substrate is described, comprising linked polyurethane particles and coco fibers. The polyurethane particles can for instance comprise flakes which are linked together by means of a secondary polymerization process. In this substrate, the roots of the plants will grow between the walls of the particles while smaller roots may develop in the pores of the substrate particles. The coco fibers contribute to the moisture absorbing capacity of the substrate.

From NL 9 002 467, it is already known to mix polyurethane foam flakes with a prepolymer based on polyurethane, after which the foam flakes are linked by means of polymerization of the pre-polymer, while being heated and while moisture, for instance steam, is added, and the obtained mixture is compressed in a molding press. The thus obtained substrate has, for instance, a density of 60 to 140, in particular approximately 80 kilograms per cubic meter. This density contributes to the water uptake capacity and/or water retention capacity. Here also, roots will develop between the foam flakes.

As known, virgin polyurethane is primarily formed by reacting polyol with isocyanate in, for instance, a mold, and with the aid of water as blowing agent. This is the primary forming process from which virgin polyurethane foam, also called primary polyurethane foam, will be formed. In many cases, during or after this primary forming process, additives are added such as, for instance, fire retardants. After this primary forming process, in a second forming process, the foam blocks are cut into a particular shape or size, depending on the intended use, for instance chairs or mattresses. In many cases, upon cutting, polyurethane foam rests are formed. Polyurethane rests can also come about in other manners during the primary or secondary forming process.

It is customary to process the polyurethane foam rests that are formed in the production process into flakes for use in plant substrates, as described in European patent EP 0 962 129 and Dutch patent NL 9 002 467. In these cases, a linking process, for instance a second polymerization process, is used for realizing a block or mat from the rests.

In the existing processes, the risk is present that substances toxic to plants or otherwise undesired substances are present in the flakes. A fire retardant, added as additive into the polyurethane foam, may have a toxic effect on plants in the substrate, so that a part of the plants may die and/or the growing process is adversely affected. In order to obviate this, the flakes may be sorted before they undergo a second polymerization process to be linked to form a plant substrate, which is a labor intensive process. It is furthermore difficult to determine with certainty whether the substrate actually contains 100% of "clean" material. When undesired substances are present in the polyurethane, this may damage the plants and/or seeds in the substrate and/or hinder the growth thereof, which may present a major setback.

It is an object of the invention to present an alternative plant substrate.

This object and/or other objects may be achieved with a plant substrate obtained by the method according to claim 1.

It has appeared that it can be advantageous to utilize primary polyurethane foam for use as plant substrate. This means that the virgin foam, which is formed through the reaction of liquid polyol with isocyanate, can be directly deployed as plant substrate. Thus, for instance, a polyurethane plant substrate formed in one piece can be manufactured, instead of first, cutting it and then linking it through a secondary polymerization process.

Primary polyurethane foam appears to have sufficient moisture regulating and air transmissive properties. Roots can grow and function in the primary polyurethane too. With the conventional polyurethane substrate, channels are formed between the polyurethane flakes, through which the roots grow. In principle, the roots do not grow through the flakes themselves. It may be possible that the cells present in the compressed polyurethane are closed such that the roots can break through them only with difficulty. Now, it has appeared that with primary polyurethane, a cell structure and/or thin cell walls can be achieved that are open to such an extent that the roots break through them, also when a single block of primary polyurethane foam is used. Also, sufficient moisture is retained for storage and supply of moisture.

Unfavourable additives can be left out in the primary process and/or favorable substances can be added in the primary process. This prevents any setbacks and renders the manufacture of the plant substrate relatively little labor intensive.

Also, lighter polyurethane foam can be used, for instance because no second polymerization or form pressing takes place, which furthermore appears to have favorable moisture regulating properties.

The plant substrate comprises a high ethylene oxide containing polyurethane foam, formed from high ethylene oxide containing polyol and an isocyanate. In one embodiment, the plant substrate comprises hypersoft polyurethane foam. This type of polyurethane foam is light and has good moisture absorbing and/or moisture retaining and/or moisture exuding properties. Also, roots of plants appear to grow and take up moisture from this substrate well. In addition, with such a substrate, a favorable supply of gases, in particular air, to the roots and/or other parts of the plant can be achieved.

It is particularly favorable if the substrate comprises an open cell structure, where the cell size is less than 800 µm, more particularly less than 700 µm, preferably less than 500 µm. In a particularly advantageous embodiment of the invention, the cell size is, for instance, between approximately 100 µm-400 µm. Surprisingly, applicant has found that such a small cell size is important to the amount of available water in the substrate, which amount of water is available for a plant growing on the substrate. In other words, by using such a small cell size in the plant substrate, the plant substrate has good hydrophilic and capillary properties, which means that the substrate can retain a relatively large water buffer and can gradually dispense water from this buffer to the plant. Preferably, with such a cell size, it is achieved that the capilary action of the foam is enhanced and that the water uptake is increased. What is further achieved with such a cell size is that water taken up in the substrate does not, or does not substantially, leak from the substrate so that water is available for the plant, at least can be dispensed to the roots of the plant. Through the cell size, the water content in the substrate can be approximately equal to or greater than 600 ml per 1,000 ml of substrate, more particularly equal to or greater than 700 ml per 1,000 ml of substrate and preferably be equal to or greater than 750 ml per 1,000 ml of substrate. These water content values (also pF0 values) are determined by means of submerging a substrate according to the invention with a substrate height of 75 mm in water for twenty-four hours, with the substrate taking up water in the open cells. After the twenty-four hours have passed, the substrate is placed on a grate so that it can drain at atmospheric pressure for thirty minutes. After thirty minutes, the weight of the substrate is determined and the water content can be determined.

Surprisingly, it has appeared that through the use of a polyol, such as a polyether polyol, with a viscosity equal to or greater than 7,500 mPa.s at 23°C, which is more particularly equal to or higher than 10,000 mPa.s at 23°C, a polyurethane foam with such a small cell size can be formed.

Such a polyol with an increased viscosity can be obtained by prepolymerizing a known polyol with a small amount of isocyanate. As a result, a polyol is formed having an increased viscosity with a value as mentioned hereinabove. The polyurethane foam which is then formed from such a polyol with increased viscosity can even contain cells with a cell size of approximately 300 µm or smaller. The known polyol can for instance be a conventional non-filled polyether polyol with a viscosity of 500-1,000 mPa.s or a filled or a grafted polyol with a viscosity of 1,000-7,000 mPa.s. If such a known polyol were to be used for forming the substrate without prepolymerization, it has appeared that the cell size as described hereinabove cannot be achieved.

Depending on the known polyol and the predetermined viscosity of the polyol with increased viscosity to be achieved, a particular amount of isocyanate is determined that is to be used with the prepolymerization mentioned such that after prepolymerization, the isocyanate is reacted away in the polyol and has resulted in chain extension within the polyol with increased viscosity. In an example of the manufacture of a primary polyurethane foam according to the invention, in a first step, 1 gram of a known polyol with a viscosity of 650 mPa.s is mixed with 35 mg of toluene diisocyanate, which reaction resulted in a new polyol according to the invention with a viscosity of 12,800 mPa.s. Then, in a second step, this new polyol with increased viscosity was mixed with toluene diisocyanate, water, a catalyst and a surfactant, after which a primary polyurethane foam according to an embodiment of the invention was formed with a density of 34.6 kg/m³, a hardness of 2.9 kPa and a regular, open cell structure with an average cell diameter of 390 µm.

A thus obtained plant substrate of polyurethane foam according to the invention preferably has a hardness (CDH 40% - ISO 3386) which is equal to or less than 20 kPa, more particularly is equal to or less than 10 kPa. Such a foam is a soft, flexible foam which, at the same time, is sufficiently hard for supporting plants on the substrate. The substrate preferably has a hardness greater than 0.5 kPa, preferably greater than 1.5 kPa.

It is noted that in EP 0,365,096, a plant substrate from a polyurethane foam formed in one piece is disclosed. The plant substrate comprises an open cell polyurethane foam comprising 10-50 percent by weight of ethylene oxide, more particularly 12-40 percent by weight. The density of the substrate of polyurethane foam is 15-30 kg/m³, more particularly 18-25 kg/m³. The polyurethane foam is a semi-rigid foam having a homogenous open cell structure, with the foam comprising 10-25 cells per cm.

In an advantageous embodiment of the invention, the plant substrate is reused after use. Since virgin polyurethane foam instead of twice polymerized polyurethane is used as plant substrate, it can relatively advantageously be reused after use. To this end, the used substrate can for instance be used again as plant substrate, to which end it is, for instance, cleaned first, for instance by means of steam cleaning or dielectric cleaning. The polyurethane is less processed than other already known plant substrates from polyurethane, such as, for instance, doubly-polymerized and/or pressed polyurethane flakes. The substrate can also be suitably used for generating energy, for instance through combustion, as no difficulty combustible substances are present in the substrate and/or a large part of the substrate can be converted to energy.

This object and/or other objects can also be achieved with a method according to claim 7.

Further advantageous embodiments according to the invention are represented in the subclaims and will also appear from the description, in which the invention is further described in several exemplary embodiments with reference to the appended drawing. In the drawing:

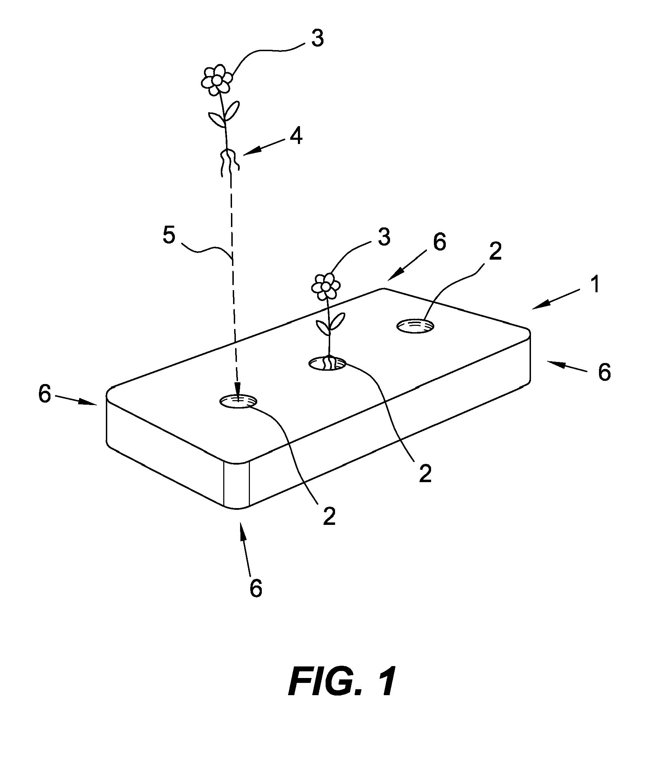

Fig. 1 shows a plant substrate with plants in perspective.

In this specification, identical or corresponding parts have identical or corresponding reference numerals. In the drawing, embodiments are shown merely by way of example. The elements used therewith are mentioned only by way of example and should not be construed to be limitative in any manner.

In Fig. 1, a plant substrate 1 is shown, comprising a block or mat of polyurethane foam formed in one piece. The block may have dimensions in the order of approximately 3 x 0.5 x 0.2 meter or less, in particular 2 x 0.2 x 0.1 meter or less, for instance approximately between 1 x 0.1 x 0.05 meter to 1.2 x 0.2 x 0.1 meter or less. The substrate 1 comprises virgin polyurethane foam, also called primary polyurethane foam, and is deployed, *inter alia,* for growing plants. In the above description, 'plant' can be understood to mean at least a flower, crop, vegetable, cutting and/or seed, that is present for instance in a plug or block for cuttings. In principle, the substrate 1 is the direct product of the primary polyurethane foam-forming process through the reaction between polyol and isocyanate, in one embodiment for instance with addition of water as blowing agent. When foaming the polyol and the isocyanate, an additional blowing agent, a catalyst and/or a surfactant can be added to obtain the desired polyurethane foam. The polyol is a polyol with an increased viscosity, preferably a polyether polyol, with the viscosity being higher than 7,500 mPa.s at 23°C, more particularly higher than 10,000 mPa.s at 23°C. Such a viscosity is a permanent end viscosity. Such a polyol of increased viscosity can be formed by prepolymerizing a known polyol with a small amount of isocyanate. The amount of isocyanate to be used depends *inter alia* on the known polyol to be used and for instance on the initial viscosity of such a known polyol. After prepolymerization, a polyol is obtained in which the isocyanate has effected a chain extension. The known polyol can for instance be a conventional, non-filled polyether polyol with a viscosity of 500-1,000 mPa.s or a filled or a grafted polyol with a viscosity of 1,000-7,000 mPa.s.

The polyurethane foam which is obtained with the aid of the polyol of increased viscosity has an open cell structure with cells having a relatively small size of 800 µm or less, more particularly of 700µm or less, preferably less than 500 µm. In a particularly favorable embodiment of the invention, a cell size of approximately 300 µm can be achieved. Surprisingly, it has appeared that through such a relatively small cell size, the plant substrate has particularly favorable water buffering capacities and capillary capacities. In other words, there is a large amount of water available in the substrate for the plants growing thereon, which amount of water appears available also after some time has passed and which amount of water can easily be gradually given off to the plants, at least to the roots thereof. Preferably, the water content in the substrate is equal to or more than 600 ml per 1,000 ml of substrate foam, given a substrate height of 75 mm. With the plant substrate according to the invention, a water content (also pF0) of 700 ml or more per 1,000 ml of substrate foam, even of 750 ml or more given a substrate height of 75 mm can be achieved. This is particularly favorable to the growing conditions of the plant.

Such an amount of water per 1,000 ml of substrate foam has preferably been determined by submerging a piece of foam having a substrate height of 75 mm under water for twenty-four hours. During this time period, the substrate takes up an amount of water. After twenty-four hours, the filled up piece of substrate is taken out of the water and it is left on a grate for thirty minutes at an atmospheric pressure so that it can drain. After the thirty minutes have lapsed, the substrate is weighed and the amount of water in the foam is determined.

The substrate 1 may optionally be provided with holes 2, which can be provided in the substrate, for instance by a grower or user himself or by the manufacturer, for instance through cutting. In another embodiment, the holes 2 are for instance provided during the primary forming process, for instance by means of corresponding mold parts. A plant 3 can partly, for instance by the roots 4, or by means of a plug and/or a block for cuttings, or the like, be placed on the substrate or in a hole 2, as indicated with arrow 5.

In one embodiment, the primary polyurethane foam is formed in a mold, where the polyurethane substrate 1 after forming is provided with a skin. At the outside, the substrate 1 is then for instance practically closed, at the inside, the substrate 1 is provided with a preferably partly open cell structure. What can be achieved by providing, in particular cutting, holes 2 in the substrate 1 is that the moisture is retained within the substrate 1 while the roots obtain access to the open cell structure through the cut-open inner wall of the hole 2.

In another embodiment, for instance a cut is made in the substrate 1 in which the plant 3 can be inserted.

In one embodiment, the substrate 1 has bevelled corners 6, which corners can for instance be cut off by the grower or user or have been formed during the primary forming process by means of the mold. The bevelled corners 6 can contribute to an improved water discharge and/or through-feed when the substrate 1 is placed for instance in a tray or on a table.

As can be seen, the substrate 1 of primary polyurethane foam is formed in one piece, while multiple plants 3 can extend at least partly into the substrate 1. The roots 4 of the plants 3 are for instance in the substrate 1, or are at least largely surrounded by the substrate 1. Optionally, a plug or the like surrounds the roots 4. The plant 3 is fed by means of the part of the plant 3 extending in the substrate 1 by moisture and/or other nutrients which are held in the substrate 1. The substrate 1 is designed such that it absorbs and/or adsorbs moisture in a favorable manner. Preferably, the porosity of the polyurethane is selected such that the substrate has advantageous moisture-retaining, moisture-releasing and gas-passing properties. For instance, these properties can be achieved through control and tuning of the conditions of the primary process. In particular, adding surface tension breakers in the primary foaming process can allow positive and/or negative control of the water uptake behavior of the polyurethane substrate 1. By adding hydrophilic additives it is for instance possible to influence the water buffer in the substrate material positively and/or negatively. In this way, particular primary needs, or all primary needs, of the plant 3, such as, for instance, supply of air and/or water can be controlled. Also, for instance, the local density in the polyurethane can be varied for the purpose of improved moisture- and air-regulating properties.

An embodiment of the polyurethane foam utilizes for instance 40 to 80 percent by weight, in particular 50 to 70 percent by weight of polyether polyol, preferably a poly-alkylene oxide containing polyurethane, in particular for instance a polyethylene oxide and/or a polypropylene containing polyol. A particular embodiment utilizes high ethylene oxide containing polyol, for forming so-called high ethylene oxide containing polyurethane. For instance, the bulk density of the resulting polyurethane is less than or equal to 70 kilograms per cubic meter, in particular 50 kilograms per cubic meter, more particularly 40 kilograms per cubic meter. In an embodiment, the polyurethane foam is for instance hypersoft polyurethane foam, which is known to the skilled person.

It has appeared that during growth the roots 4 of the plants 3 find their way within the substrate 1 in a favorable manner. Without wishing to be bound to any theory, an explanation could be that the roots find their way through the pores, in particular between the links and connecting units of the polyurethane. While conventional virgin polyurethane may normally speaking involve formation of film between the pores, the primary process according to the invention is preferably conditioned and managed such that an open cell structure is achieved, preferably with relatively few or with relatively thin films between the cells. The openness of the cells can be controlled during the production process. In addition, there is for instance the possibility of somewhat flattening and/or compressing the material after production, preferably temporarily, so that the films formed can break. In other cases the roots 4 of the plants 3 are for instance so strong that upon growth they can penetrate the films. This may lead to a favorable moisture balance of the substrate 1 and a favourable continued growth of the roots 4 into the substrate 1, since obstruction of continued growth of the roots 4 is prevented.

The primary polyurethane is preferably relatively light, for instance the density of the substrate 1 is less than or equal to approximately 70 kilograms per cubic meter, in particular less than or equal to approximately 50 kilograms per cubic meter, more particularly less than or equal to approximately 40 kilograms per cubic meter. In an embodiment, the density is for instance between 15 and 40 kilograms per cubic meter, for instance 20 or 30 kilograms per cubic meter.

In an embodiment, in the primary process, an additive is added to the polyol and isocyanate and/or polyurethane, which additive could comprise a material taking-up or attracting moisture. This may for instance be hydrophilic material. Preferably, the additive is a solid that takes up and/or attracts water. Favorable additives are, for instance but not exclusively, particular fibers such as for instance coco fibers, cellulose fibers, paper fibers. However, the additive could also comprise, for instance, a water absorbing gelling agent, for instance a water absorbing gelling agent such as known in the technical field of diapers.

In an embodiment, the substrate 1, after having served as plant substrate 1, can be reused. For instance, after having been cut into flakes, the substrate 1 can undergo a second polymerisation process or other second fabrication process. Also, after use, the substrate 1 could be converted to energy, for instance through burning. Through the favorable conditioning of the primary process and/or since no disadvantageous additives such as for instance fire retardants and/or difficultly combustible substances are used, energy recovery can be very high. For instance, at least 80%, in particular at least 90%, more particularly practically 100% of the material of the substrate 1 is reused or burned, in particular for energy production.

The described and multiple comparable variants, as well as combinations thereof are understood to fall within the framework of the invention as outlined by the claims. Naturally, different aspects of different embodiments and/or combinations thereof can be mutually combined and exchanged. There should thus be no limitation to only the embodiments mentioned.

Clauses:
1. A plant substrate comprising a primary polyurethane foam in one piece of formed polyurethane foam, wherein the polyurethane comprises alkylene oxide, in particular high ethylene oxide, which is formed from at least a high ethylene oxide containing polyol and an isocyanate.
2. A plant substrate according to clause 1, wherein the substrate comprises an open cell structure, wherein a cell size is smaller than 800 µm, is more particularly smaller than 700 µm, is preferably smaller than 500 µm.
3. A plant substrate according to clause 2, wherein the cell size is between 100 µm - 400 µm.
4. A plant substrate according to any one of the preceding clauses, wherein the polyol is a polyol having an increased viscosity, wherein the viscosity is higher than 7500 mPa.s at 23°C, is more particularly higher than 10,000 mPa.s at 23°C.
5. A plant substrate according to any one of clauses 1 - 4 ,wherein the density of the substrate is less than or equal to approximately 70 kilograms per cubic meter, in particular less than or equal to approximately 50 kilograms per cubic meter, more particularly less than or equal to approximately 30 kilograms per cubic meter.
6. A plant substrate according to any one of the preceding clauses, wherein the hardness of the polyurethane foam is equal to or less than 20 kPa, more particularly is equal to or is less than 10 kPa.
7. A method for manufacturing a plant substrate, comprising reacting a polyol with an isocyanate into primary polyurethane foam in a primary polyurethane process, wherein a plant substrate for growing plants is formed.
8. A method according to clause 7, wherein the polyol has an increased viscosity, wherein the viscosity is higher than 7500 mPa.s at 23°C, more particularly is higher than 10,000 mPa.s at 23°C, wherein a polyurethane foam is obtained having an open cell structure, wherein a cell size thereof is less than 800 µm, more particularly less than 700µm, preferably less than 500 µm.
9. A method according to clause 8, wherein a polyurethane foam is obtained having an open cell structure wherein the cell size thereof is between 100 µm - 400 µm.
10. A method according to clause 8 or 9, wherein the polyol having the increased viscosity is formed by prepolymerizing a known polyol with an amount of isocyanate.
11. A method according to clause 10, wherein the amount of isocyanate is determined depending on the known polyol and the viscosity to be achieved of the polyol having the increased viscosity.
12. A method according to clause 10 or 11, wherein the known polyol is a conventional non-filled polyether polyol with a viscosity of 500-1,000 mPa.s or a filled or a grafted polyol having a viscosity of 1,000-7,000 mPa.s.
13. A method according to any one of clauses 7 - 12, wherein a polyol is used which comprises alkylene oxide, in particular high ethylene oxide.
14. A method according to clause 13, wherein a polyol is used having an alkylene oxide content of 40 to 80 percent by weight, in particular 50 to 70 percent by weight.
15. A method according to any one of clauses 7 - 14, wherein the substate after use is reused, or wherein energy is generated by burning the substrate.
16. A method according to any one of clauses 7 - 15, wherein during the primary polyurethane foam forming process, an additive is added to the polyol and isocyanate and/or polyurethane, which additive comprises a material that takes up water and/or attracts water, preferably a solid taking up and/or attracting water.
17. A method according to any one of clauses 7 - 16, wherein a substrate according to any one of clauses 1 - 6 is formed.
18. Use of a plant substrate according to any one of clauses 1 - 6 for growing plants.

## Claims

1. A method for manufacturing a plant substrate, comprising reacting a polyol with an isocyanate into primary polyurethane foam in a primary polyurethane process, wherein a plant substrate for growing plants is formed, wherein the polyol has an increased viscosity, wherein the viscosity is higher than 7500 mPa.s at 23°C, more particularly is higher than 10,000 mPa.s at 23°C, wherein a polyurethane foam is obtained having an open cell structure, wherein a cell size thereof is less than 800 µm, more particularly less than 700µm, preferably less than 500 µm.

2. A method according to claim 1, wherein a polyurethane foam is obtained having an open cell structure wherein the cell size thereof is between 100 µm - 400 µm.

3. A method according to claim 1 or 2, wherein the polyol having the increased viscosity is formed by prepolymerizing a known polyol with an amount of isocyanate.

4. A method according to claim 3, wherein the amount of isocyanate is determined depending on the known polyol and the viscosity to be achieved of the polyol having the increased viscosity.

5. A method according to claim 3 or 4, wherein the known polyol is a conventional non-filled polyether polyol with a viscosity of 500-1,000 mPa.s or a filled or a grafted polyol having a viscosity of 1,000-7,000 mPa.s.

6. A method according to any of the previous claims, wherein a polyol is used which comprises alkylene oxide, in particular high ethylene oxide.

7. A method according to claim 6, wherein a polyol is used having an alkylene oxide content of 40 to 80 percent by weight, in particular 50 to 70 percent by weight.

8. A method according to any of the previous claims, wherein the substate after use is reused, or wherein energy is generated by burning the substrate.

9. A method according to any one of the previous claims, wherein during the primary polyurethane foam forming process, an additive is added to the polyol and isocyanate and/or polyurethane, which additive comprises a material that takes up water and/or attracts water, preferably a solid taking up and/or attracting water.

10. A plant substrate obtainable a method according to any one of the previous claims.
